# EUROPEAN PATENT APPLICATION

(11) **EP 1 208 752 A1**
(43) Date of publication of application: **29.05.2002**
(21) Application number: 00204201.8
(22) Date of filing: 24.11.2000
(51) Int. Cl.: A23L 1/105, A23L 1/10

(54) **Cereal product containing hydrolysed, acidified and heat treated fibre product**

(71) Applicant: SOCIETE DES PRODUITS NESTLE S.A., 1800 Vevey (CH)
(72) Inventor: Wood, Robert, 1164 Buchillon (CH); De Reu, Johannes, 1033 Cheseaux s/Lausanne (CH); Blinet, Thierry, 1400 Yverdon (CH)
(74) Representative: Wavre, Claude-Alain

(57) **Abstract**

A cereal and/or legume product consisting of a fibre hydrolyzed, acidified, heat treated and dried mixture of cereal and/or legume and water.

## Description

The present invention relates to a cereal and/or legume product, especially to an infant cereal and to a process for manufacturing it.

EP0338787 (NABISCO BRANDS) discloses an enzymatic treatment of a farinaceous material with pentosanase or beta-glucanase to produce a hydrolyzis product which reduces the water regain or increases the tolerance to moisture of low moisture content comestibles such as crackers or cookies.

US4247636 (SCHOENROCK et al.) discloses a process for producing highly concentrated syrups by treating impure starch flours firstly with beta-glucanase, then with alpha-amylase and eventually, after having separated the solids and cereal germ oils from the aqueous solution, with glucoamylase.

EP0462993 (ALKO) discloses a cellulose-containing fine fibre to be used as raw material in the food industry, which is obtained from plant stalks or grain husks by enzymatic hydrolyzis with an enzyme preparation having cellulase, hemicellulase, beta-glucanase, pectinase and/or proteolytic activity.

A first object of the present invention is to provide a cereal and/or legume product, especially an infant cereal with enhanced nutritional properties.

A second object of the present invention is to provide a process for manufacturing such a cereal and/or legume product, especially an infant cereal with enhanced nutritional properties.

To this end, the present cereal and/or legume product consists of a fiber hydrolyzed, acidified, heat treated and dried mixture of cereal and/or legume and water.

The present process for manufacturing a cereal and/or legume product comprises preparing a mixture of ground cereal and/or legume and water, subjecting the mixture to a fibre hydrolyzis, acidifying the mixture, heat treating and drying it.

It has surprisingly been found that it was possible in this way to provide with an enhanced efficiency a cereal and/or legume product, especially an infant cereal with enhanced nutritional properties.

It especially is possible in this way to work with a mixture having a high dry matter content, the viscosity of the starting mixture being lowered by hydrolyzing the fibres rather than the starch so that the end viscosity of the product may still be conferred by the starch which may be gelatinised during cooking.

Thus, the present cereal and/or legume product consists of of fiber hydrolyzed, acidified, heat treated and dried mixture of cereal and/or legume and water.

A preferred embodiment of the present product comprises, in % by dry weight, from 20 to 80% of ground cereal grain and from 20 to 80% of ground legume.

The cereal may be wheat, triticale, rye, barley, oat, rice, corn, barley, sorghum, millet or buckwheat, for example.

The legume may be soya, pea, cowpea, mung bean, chick pea or lentil, for example.

Further starch bases such as potato or yam may be used in addition to and/or in replacement of the ground cereal grain in the mixture.

The mixture may further comprise additional oil or fat such as milk fat, corn oil, safflower oil, rape seed oil, coconut fat, palm oil or palm kernel oil, for example.

The mixture may further comprise additional sugar such as sucrose, maltose, lactose or dextrose, for example.

The mixture may further comprise additional protein such as milk protein in form of milk solid non fat, whey protein or casein, for example.

The mixture may also further comprise added vitamins, oligoelements, sodium chloride and/or antioxidants, for example.

In a preferred embodiment of the present cereal product the mixture may comprise, in % by dry weight, from 1 to 20% of whole grain cereal flour which is an endogeneous phytase source. In this embodiment, the present product may have a phytic acid content which is smaller than 700 µg/g, preferably smaller than 100 µg/g.

The whole grain cereal may be any suitable cereal which is an endogeneous phytase source, such as barley, buckwheat, wheat, triticale or rye, for example.

In another preferred embodiment, the present cereal and/or legume product may have a pH which is notably lower than the pH of the starting mixture, especially lower than 6.0 or even lower than 5.0, for example.

The present process for manufacturing a cereal and/or legume product comprises preparing a mixture of ground cereal and/or legume and water, subjecting the mixture to a fibre hydrolyzis, heat treating the hydrolyzed mixture and drying it.

For implementing the present process, a mixture may be prepared which comprises ground cereal grain and/or legume, optionally additional oil or fat, optionally additional sugar, optionally additional protein, and added water up to a water content of from 45 to 75% by total weight of the mixture, for example.

In a preferred embodiment, a mixture is prepared which comprises, in % by dry weight, from 20 to 80% of ground cereal grain and from 20 to 80% of ground legume.

In a further preferred embodiment, a mixture is prepared which further comprises, in % by dry weight, from 1 to 20% of whole grain cereal flour which is an endogeneous phytase source.

The mixture may be prepared by first mixing together powdery components to obtain a dry mix and then mixing together the dry mix and liquid or fluid components, for example.

Subjecting the mixture to a fibre hydrolyis may be carried out by adding a suitable amount of cellulase, hemicellulase, carbohydrase, pentosanase and/or glucanase to the mixture and incubating for 1 to 10 hours at a temperature and a pH favourable to the activity of the enzyme, for example. Commercial enzymes such as a complex of carbohydrases marketed by the Company NOVO NORDISK under the name Viscosym L or an enzyme high in beta-glucanase activity marketed by the same Company under the name Cereflo 200 L are especially convenient, for example.

Adjusting the pH to a value adequate for the activity of the enzyme may be carried out, where necessary, by adding any adequate and food grade acid or base to the mixture, for example.

In a preferred embodiment of the process where a mixture is prepared which further comprises, in % by dry weight, from 1 to 20% of whole grain cereal which is an endogeneous phytase source, the enzyme for the fibre hydrolyzis preferably should be active at a pH and temperature also favourable to the activity of phytase. In this case an acidic pH of from 4.5 to 6.0 and a temperature of from 35 to 60°C are preferred.

Adjusting the pH to an acidic value may be carried out by adding citric acid, tartaric acid, malic acid, or hydrochloric acid to the mixture, for example.

In a preferred embodiment of the process, the pH is adjusted to an acidic value by means of fermenting the mixture with a lactic acid bacteria such as *Lactobacillus plantarum,* preferably with a L+ lactic acid producing bacteria and/or a probiotic lactic acid bacteria such as *Lactobacillus casei, Lackobacillus paracasei* or *Lactobacillus sake,* for a time and at a temperature favourable to the respective activities of both the lactic acid bacteria and the fibre hydrolyzing enzyme, especially for 1 to 10 hours at from 35 to 45°C, for example.

Most preferably, the above preferred embodiments are combined in order to carry out simultaneously the hydrolyzis of the fibres, the hydrolyzis of the phytic acid and the fermentation by a lactic acid bacteria.

In a further preferred embodiment of the present process, for nutritional purposes, the mixture after fermentation is subjected to a starch hydrolyzis with alpha amylase at temperatures between 60 and 90°C at pH 4.0-6.0, preferably between 4.0 and 4.5.

Commercial enzymes such as alpha amylases marketed by the Company NOVO NORDISK under the name Ban (240, 400 or 800) are especially convenient, for example.

Heat treating the fibre hydrolyzed mixture may be carried out by any traditional heat treating step such as water-, steam injection- or extrusion-cooking, for a time and at a temperature sufficient for both gelatinising the starch and inactivating the enzyme and/or the lactic acid bacteria in the mixture, for example.

Drying may then be carried out by any traditional drying step such as vacuum-, hot air-, spray- or roller drying, for example.

The cereal and/or legume product thus provided may be considered to be a value added product as compared with traditional product to which it may be compared, especially with regard to its modified/improved taste and texture, its increased nutritive value (e.g. phytic acid content reduced to less than 700 µg/g, preferably less than 100 µg/g, enrichment in prebiotics by fermentation), and its increased safety (e.g. thanks to a low pH value and to the production of fermentation metabolites).

The following examples are given as illustration of embodiments of the present cereal and/or legume product and of its manufacturing process. The parts and percentages are by weight.

### Example 1

For manufacturing a cereal and legume product which can be eaten as such or as a main component of an infant formula, a mixture was prepared which comprised one part wheat flour, one part defatted soya bean flour, one part whole wheat flour and added water up to a water content of 70%.

The mixture was inoculated with a mixed starter of *Lactobacillus paracasei* and *Lactobacillus sake* and with an enzyme preparation high in beta-glucanase activity (Cereflo 200 L of NOVO NORDISK).

The mixture was incubated for 6-7 h at 37°C down to a pH value of 4.2.

The fermented and hydrolyzed mixture was steam injection cooked at 110-140°C for 20-60 s, roller dried and milled.

The product thus obtained had an improved, smooth texture, an improved, fruity taste, an increased nutritive value, especially a phytic acid content reduced to less than 100 µg/g, and an increased safety due to its low pH value of 4.2.

It could be eaten as such or as a main component in an infant formula.

### Example 2

For manufacturing a cereal and legume product which can be eaten as such or as a main component of an infant formula, a mixture was prepared as disclosed in Example 1.

The mixture was inoculated with a starter of *Lactobacillus paracasei* CNCM I-2116 (Collection Nationale de Culture de Microorganismes, 25 rue du docteur Roux, F-75724 Paris) and with an enzyme preparation high in beta-glucanase activity (Cereflo 200 L of NOVO NORDISK).

The inoculated mixture was incubated, cooked, dried and milled as disclosed in Example 1.

The product thus obtained had an improved, smooth texture, an improved, fruity taste, an increased nutritive value, especially a phytic acid content reduced to less than 100 µg/g, and an increased safety due to its low pH value of 4.2.

It could be eaten as such or as a main component in an infant formula.

### Example 3

For manufacturing a cereal and legume product with reduced phytic acid, the following process steps were carried out:
1. Mixing 42 kg of wheat flour, 12 kg of soy flour (toasted at 160°C), 6 kg of whole wheat flour and 0.059 kg of Cereflo 200 L with 90 kg of water
2. Adjusting the pH with citric acid (20% w/v) to 5.4
3. Adding 1% (v/v) of a starter of *Lactobacillus plantarum* and 2% of a starter of *Lactobacillus casei* which were grown for 16 hours at 37°C on MRS so that the cell counts were between 10⁶ and 10⁸ cfu/ml at start of fermentation)
4. Fermenting at 37°C for 6 hours, under continuous agitation in a 200 liter tank
5. Pasteurizing at 110°C for 110 seconds
6. Roller drying on a 1.5 m2 monocylinder with satellites, steam pressure 9 bar, to obtain a product with 2-3% moisture
7. Milling the product using a Gouda mill with a 2 mm sieve

The product thus obtained had the following properties/contents:

| | |
|---|---|
| pH | 4.32 |
| Acidity | 28.2 mEq/100 g dry matter |
| Reducing sugars | 2.7% |
| Phytic acid: | less than 100 µg/g (no detectable levels) |

| Microbiology: | |
|---|---|
| Total mesophilic cell count: | < 10 cfu/g |
| Yeasts & Moulds: | < 100 cfu/g |
| Coliforms: | Negative in 2 determinations (< 10 cfu/g) |
| E.coli | Negative in 1 g |
| Staphylococcus aureus: | < 50 cfu/g |

This product had enhanced nutritional properties, especially no detectable levels of phytic acid content.

It could be eaten as such or as a main component in an infant formula.

### Example 4

For manufacturing a cereal and legume product with especially enhanced safety, the following process steps were carried out:
1. Mixing 60 kg of wheat flour, 11 kg of soy flour (toasted at 160°C), 8 kg of whole wheat flour and 0.083 kg of Cereflo 200 L with 120 kg of water
2. Adding 4% (v/v) of a starter of *Lactobacillus paracasei* which was grown for 16 hours at 37°C on MRS (cell count 3.10⁹ cfu/ml)
3. Fermenting at 37°C, under continuous agitation in a 200 liter tank
4. When pH < 4.8 adding 0.40 kg of sodium biphosphate, 0.017 kg of tocopherol and 0.809 kg of calcium carbonate
5. Fermenting until desired pH 4.5 (8 hours) or 4.2 (9 hours)
6. At the end of the fermentation increasing the temperature to 60°C and keep it for 10 minutes at 60°C
7. Adding 3.75 kg of palm oil
8. Transferring the fermented mixture to the hydrolyzis line
9. Increasing the temperature by direct steam injection up to 75°C
10. Subjecting the mixture to a starch hydrolyzis by using 0.007 %(w/v) alpha amylase Ban 480 L (NOVO NORDISK) at 75°C for 2 minutes
11. Pasteurizing at 140°C for 96 seconds
12. Roller drying on a 1.5 m² monocylinder with satellites, steam pressure 9 bar, to obtain flakes with 3% moisture
13. Milling the flakes using a Gouda mill with a 2 mm sieve
14. Completing 94 kg milled flakes with 5 kg of pear powder, 0.412 kg of sodium chloride, 0.364 kg of iron pyrophosphate and 0.136 kg vitamin premix

The cereal and/or legume product thus obtained was subjected to a microbiological challenge test. It proved to offer an especially well enhanced resistance to the growth of inoculated pathological microorganisms at test temperatures of 4, 25 and 37°C.

It could be eaten as such or as a main component in an infant formula.

### Example 5

For manufacturing a fibre hydrolyzed mungbean (ex India) product, the following process steps were carried out:
1. Mixing 65 kg of mungbean flour, 0.065 kg of Cereflo 200 L (NOVO NORDISK) or 0.065 kg of Viscozym (NOVO NORDISK) with 86 kg of water (60°C) in a 200 l vessel with agitator
2. Hydrolyzing the fibres during 2 hours at 50°C
3. Transferring the hydrolyzed mungbean to a pasteurization line
4. Using direct steam injection to pasteurize at 134°C.
5. Roller drying on a 1.5 m2 monocylinder with satellites, steam pressure 9 bar, to obtain flakes with 2-3% moisture
6. Milling the flakes using a Gouda mill with a 2 mm sieve

The fibre hyrolyzed mungbean product thus obtained could be used as a main ingredient in an infant formula.

### Example 6

For manufacturing a fibre hydrolyzed dehulled cowpea flour (ex Yvory Coast) product, the following process steps were carried out:
1. Mixing 64 kg of cowpea flour, 0.064 kg of Cereflo 200 L (NOVO NORDISK) or 0.064 kg of Viscozym (NOVO NORDISK) with 86 kg of water (60°C) in a 200 l vessel with agitator
2. Hydrolyzing the fibres during 2 hours at 50°C
3. Transferring the hydrolyzed mixture to a pasteurization line
4. Using direct steam injection to pasteurize at 134°C
5. Roller drying on a 1.5 m2 monocylinder with satellites, steam pressure 9 bar, to obtain flakes with 2-3 % moisture
6. Milling the product using a Gouda mill with a 2 mm sieve

The fibre hyrolyzed cowpea product thus obtained could be used as a main ingredient in an infant formula.

## Claims

1. A cereal and/or legume product consisting of a fiber hydrolyzed, acidified, heat treated and dried mixture of cereal and/or legume and water.

2. A cereal and legume product as claimed in claim 1, which comprises, in % by dry weight, from 20 to 80% of ground cereal grain and from 20 to 80% of ground legume.

3. A cereal product as claimed in claim 1, which further comprises from 1 to 20% by dry weight of whole grain cereal flour which is an endogeneous phytase source.

4. A cereal and/or legume product as claimed in claim 3, which has a phytic acid content which is smaller than 700 µg/g.

5. A cereal and/or legume product as claimed in claim 3, which has a phytic acid content which is smaller than 100 µg/g.

6. A cereal and/or legume product as claimed in claim 1, which has a pH value lower than 5.0.

7. A process for manufacturing a cereal and/or legume product, which comprises preparing a mixture of ground cereal and/or legume and water, subjecting the mixture to a fibre hydrolyzis, acidifying the mixture, heat treating and drying it.

8. A process as claimed in claim 7, in which a mixture is prepared which comprises ground cereal grain and/or legume, optionally additional oil or fat, optionally additional sugar, optionally additional protein, and added water up to a water content of from 45 to 75% by total weight of the mixture, for example.

9. A process as claimed in claim 7, in which a mixture is prepared which comprises, in % by dry weight, from 20 to 80% of ground cereal grain, from 20 to 80% of ground legume.

10. A process as claimed in claim 7, in which the fibre hydrolyzis is carried out by adding a suitable amount of cellulase, hemicellulase, carbohydrase, pentosanase and/or glucanase to the mixture and incubating for 1 to 10 hours at a temperature and a pH favourable to the activity of the enzyme.

11. A process as claimed in claim 7, in which a mixture is prepared which further comprises, in % by dry weight, from 1 to 20% of whole grain cereal which is an endogeneous phytase source.

12. A process as claimed in claim 7, in which the pH of the mixture is adjusted to an acidic value by means of fermenting the mixture with a lactic acid bacteria chosen from the group comprising *Lactobacillus casei*, *Lactobacillus paracasei* and/or *Lactobacillus sake.*

13. A process as claimed in Claim 12, in which, after fermentation, the mixture is subjected to a starch hydrolyzis with alpha amylase at temperatures between 60 and 90°C at pH 4.0-6.0, preferably between 4.0 and 4.5.

14. A process as claimed in Claim 12, in which the lactic acid bacteria is a L+ lactic acid producing bacteria and/or a probiotic lactic acid bacteria.
